# EUROPÄISCHE PATENTSCHRIFT

(11) **EP 3 339 699 B1**
(45) Veröffentlichungstag und Bekanntmachung des Hinweises auf die Patenterteilung: **19.02.2020**
(21) Anmeldenummer: 17206310.9
(22) Anmeldetag: 11.12.2017
(51) Int. Cl.: F16K 5/06, F16K 5/12

(54) **VENTILANORDNUNG MIT KÄFIG**
VALVE ASSEMBLY WITH CAGE
AGENCEMENT DE SOUPAPE POURVU DE CAGE

(30) Priorität: 19.12.2016 DE 102016225372
(43) Veröffentlichungstag der Anmeldung: 27.06.2018
(73) Patentinhaber: VOLKSWAGEN AKTIENGESELLSCHAFT, 38440 Wolfsburg (DE)
(72) Erfinder: Fries, Holger, 38640 Goslar (DE)

(56) Entgegenhaltungen:
- DE-A1-102014 218 386
- US-A1- 2007 034 267
- US-A1- 2010 163 774
- US-A1- 2017 321 815

## Beschreibung

Die Erfindung betrifft eine Ventilanordnung gemäß dem Oberbegriff des Patentanspruchs 1.

Herkömmliche Brennkraftmaschinen weisen regelmäßig einen oder mehrere Kühlmittelkreisläufe zur Kühlung auf, wobei das Kühlmittel bspw. durch einen ersten Kühlmittelweg mit einem Wärmetauscher oder durch einen zweiten Kühlmittelweg ohne Wärmetauscher geleitet werden kann. Zur Regelung der durch die verschiedenen Kühlmittelwege zu leitenden Kühlmittelmengen sind regelmäßig Ventilanordnungen, wie etwa Drehschieberventile, vorgesehen. Ventilanordnungen weisen ein verstellbares Ventilglied, wie etwa einen Drehschieber, auf, das in einer ersten Ventilstellung einen Durchgang zwischen einem Fluidzuführkanal und einem ersten Fluidableitkanal freigibt und in einer zweiten Ventilstellung einen Durchgang zwischen dem Fluidzuführkanal und einem zweiten Fluidableitkanal freigibt. Auch Zwischenstellungen des Ventilglieds sind möglich, bspw. um eine optimale Kühlmitteltemperatur einstellen zu können.

In den jeweiligen Ventilstellungen muss dafür gesorgt werden, dass das dem Ventilglied zugewandte Ende eines entsprechenden Fluidkanals dichtend an dem Ventilglied anliegt, so dass ein Vordringen des Kühlmittels zu nicht dafür vorgesehenen Bereichen der Ventilanordnung, wie etwa Bereichen mit elektrischen Bauteilen, verhindert wird. Damit kann eine Beschädigung der elektrischen Bauteile verhindert werden. Ferner soll in einer geschlossenen Ventilstellung kein Kühlmittel von dem Fluidkanal an dem Ventilglied vorbei weiter in die Ventilanordnung vordringen können und umgekehrt. Zu diesem Zweck ist regelmäßig ein zwischen dem beweglichen Ventilglied und dem Ende des Fluidkanals wirkendes Dichtelement vorgesehen.

Das Dichtelement weist idealerweise ein Material auf, welches Unebenheiten des Ventilglieds möglichst gut ausgleichen kann, so dass das Dichtelement beim Gleiten des Dichtelements über das drehbare Ventilglied optimal gegen das Ventilglied abdichtet. Dies wird mittels eines weichen und/oder elastischen Materials erreicht.

Ein weiches und/oder elastisches Material kann aber beim Drehen des Ventilglieds in die Öffnung des Ventilglieds eintauchen. Dadurch kann das Dichtelement beim Anstoßen gegen den Rand der Öffnung des Ventilglieds beschädigt werden. Mittels eines Auflaufstegs kann das Dichtelement wieder auf die Höhe des Rands der Öffnung gehoben werden.

Der Auflaufsteg kann allerdings nicht beliebig verlängert werden. Das Ventilglied wird insbesondere im Spritzgussverfahren hergestellt. Dabei wird bei der Herstellung des Ventilglieds ein formgebendes Werkzeug verwendet. Dieses Werkzeug wird nach der Formgebung wieder aus dem Ventilglied gezogen. Kommt es zu einem sogenannten Hinterschnitt, dann ist es nötig, das Werkzeug in mehreren Teilen aus dem Ventilglied zu ziehen, oder es ist nötig, das Werkzeug zusammenzufalten und in diesem Zustand aus dem Ventilglied zu ziehen. Daher ergibt sich für die Geometrie der Öffnung eines Ventilglieds und des Auflaufstegs eine sogenannte entformungstechnische Grenze. Die Geometrie der Öffnung des Ventilglieds und des Auflaufstegs wird demnach so gewählt, dass das Werkzeug wieder aus dem Ventilglied gezogen werden kann. Dies betrifft auch die Geometrie der Dosiernasen, welche am Rand der Öffnungen des Ventilglieds zur feineren Regelung des Fluidstroms ausgebildet sein können.

Die US 5,287,889 A offenbart ein Ventilglied, bei welchem Dosiernasen ausgebildet sind.

Aus dem Dokument US 2007/0034267 A1 ist eine Ventilanordnung mit einem Kugelelement bekannt, welches innerhalb eines Gehäuses drehbar angeordnet ist. Ein Dichtelement dichtet den Übergang zwischen Gehäuse und Kugelelement ab, und das Kugelelement trägt an seiner Außenseite geschlitzte Platten, welche die Kontur des Kugelelements fortführen.

Im Dokument US 2010/0163774 A1 ist eine Ventilanordnung gezeigt, in welcher ein kugelförmiges Ventilglied in einem Gehäuse drehbar aufgenommen ist, wobei ein Übergang zwischen Gehäuse und Ventilglied mit einem Dichtelement abgedichtet ist. Es gibt einen strukturierten Käfig im Ventilglied, mit welchem die Fluidverbindung eingestellt wird. Der Käfig setzt die Kontur des Ventilglieds fort und unterbindet ein Durchsacken des Dichtelements in eine Öffnung des Ventilglieds.

Der Erfindung liegt die Aufgabe zugrunde, eine verbesserte Ventilanordnung bereitzustellen, bei der ein Eintauchen des Dichtelements in die Öffnung des Ventilglieds verhindert ist.

Diese Aufgabe wird erfindungsgemäß durch eine Ventilanordnung mit den in Anspruch 1 gekennzeichneten Merkmalen gelöst. Vorteilhafte Ausgestaltungen der Erfindung sind in den weiteren Ansprüchen beschrieben.

Dementsprechend wird eine Ventilanordnung, insbesondere ein Regelventil zur Regelung eines Kühlmittelkreislaufs einer Brennkraftmaschine, bereitgestellt. Die Ventilanordnung weist ein Ventilglied zum Leiten eines Fluids mit einer Öffnung und ein Dichtelement zum Abdichten eines Übergangs zwischen dem Ventilglied und einem Fluidkanal auf. Weiter umfasst die Ventilanordnung einen Käfig zum Unterbinden des Durchsackens des Dichtelements in die Öffnung des Ventilglieds. Dabei ist der Käfig in dem Ventilglied angeordnet. Zudem weist der Käfig einen freiliegenden Bereich an der Öffnung auf. An dem freiliegenden Bereich ist eine Kontur des Ventilglieds fortgeführt. Erfindungsgemäß ist zumindest eine Dosiernase mittels des Käfigs ausgebildet.

Dadurch, dass die Ventilanordnung einen Käfig aufweist, kann ein Durchsacken des Dichtelements in die Öffnung des Ventilglieds vermieden werden. Beim Gleiten des Dichtelements über die Öffnung des Ventilglieds wird das Dichtelement durch den Käfig gestützt. Damit wird das Eintauchen des Dichtelements in die Öffnung verhindert.

Dies hat den Vorteil, dass das Dichtelement nicht gegen einen Rand der Öffnung stößt und dadurch nicht beschädigt wird. Weiter kann die Öffnung des Ventilglieds größer ausgebildet sein und der Auflaufsteg kann verkürzt sein oder ganz entfallen. Dadurch wird das Entfernen des formgebenden Werkzeugs aus dem Ventilglied nach der Formgebung erleichtert.

Das Fluid kann ein Kühlmittel und insbesondere eine Kühlflüssigkeit sein. Die Öffnung ist eine Durchströmöffnung für das Fluid in der Mantelfläche des Ventilglieds. Weiter kann das Dichtelement als einstückiges oder mehrteiliges Bauteil ausgeführt sein.

Der Käfig ist ein für das Fluid durchlässiges Bauteil, damit das Fluid von dem Ventilglied zu dem Fluidkanal, oder umgekehrt, strömen kann. Insbesondere verschließt der Käfig nicht die Öffnung des Ventilglieds.

Der freiliegende Bereich des Käfigs ist derjenige Bereich des Käfigs, welcher nicht von dem Ventilglied umgeben ist, da er an der Öffnung des Ventilglieds liegt.

An dem freiliegenden Bereich ist eine Kontur des Ventilglieds fortgeführt, indem der Käfig die Kontur des Ventilglieds weiterführt. Dabei ist unter dem Begriff Kontur der Umriss oder die Silhouette des Ventilglieds zu verstehen. Dementsprechend kann das Dichtelement gut über den freiliegenden Bereich gleiten. Insbesondere kann das Dichtelement auch gut über die Nahtstelle zwischen dem Ventilglied, d.h. dem Rand der Öffnung, und dem freiliegenden Bereich des Käfigs gleiten. Dies ist deshalb möglich, weil der Rand der Öffnung und der freiliegende Bereich des Ventilglieds einen möglichst nahtlosen Übergang bilden.

Aus Herstellungsgründen ist es nicht möglich, die mittels des Rands der Öffnung ausgebildete Dosiernase beliebig weit in die Öffnung hineinragen zu lassen bzw. es ist nicht möglich, die Öffnung beliebig klein zu machen. Es ist zu beachten, dass die Öffnung des Ventilglieds so ausgebildet ist, dass ein formgebendes Werkzeug nach der Formgebung noch aus dem Ventilglied gezogen werden kann.

Dementsprechend wird eine Geometrie des Ventilglieds, die fertigungstechnisch nur schwer oder sogar gar nicht darstellbar ist, auf den Käfig übertragen. Der Käfig kann demzufolge auch zumindest eine Dosiernase aufweisen. Dabei kann die zumindest eine Dosiernase einstückig mit dem restlichen Käfig ausgebildet sein. Alternativ kann die zumindest eine Dosiernase auch als separates Element ausgebildet sein, welches mit dem restlichen Käfig verbunden ist.

Vorzugsweise umfasst der Käfig eine Gitterstruktur. Dabei weist der Käfig an dem an der Öffnung freiliegenden Bereich zumindest eine Kufe auf. Die Kufe erstreckt sich entlang einer Gleitrichtung des Dichtelements. Aufgrund der Gitterstruktur ist der Käfig gegenüber dem Fluid durchlässig. Dabei verhindert ein Gleiten des Dichtelements entlang der Kufe das Durchsacken des Dichtelements in die Öffnung.

Die Gitterstruktur kann mittels Stäben und/oder Rohren gebildet werden. Dabei ist die Gitterstruktur im Wesentlichen hohl und die Stäbe und/oder Rohre machen nur einen kleinen Teil des Volumens aus. Insbesondere beträgt der durch die Stäbe und/oder Rohre gebildete Teil des Volumens weniger als 20%, weniger als 10%, weniger als 5% oder weniger als 3% des Volumens der Gitterstruktur.

Die zumindest eine Kufe ist ein gebogenes Gleitelement, insbesondere ein gebogenes Rohr oder ein gebogener Stab. Die nach außen in Richtung des Dichtelements weisende Begrenzung der Kufe kann eine flache gebogene Fläche sein. Dabei führt die zumindest eine Kufe die Kontur des Ventilglieds fort. Weiter ist die zumindest eine Kufe so ausgerichtet, dass das Dichtelement beim Drehen des Ventilglieds entlang der Längsrichtung der Kufe gleitet.

Der Käfig kann an dem an der Öffnung freiliegenden Bereich auch mehrere Kufen aufweisen. Insbesondere kann der Käfig zwei, drei oder vier Kufen aufweisen.

In Weiterbildung der Erfindung ist es auch möglich, dass der Käfig zumindest ein durchlässiges Scheibenelement aufweist. Dabei kann das zumindest eine durchlässige Scheibenelement als ein Gitterelement ausgebildet sein, bei welchem alle Rohre und/oder Stäbe in einer Ebene verlaufen. Insbesondere kann der Käfig zwei, drei oder vier durchlässige Scheibenelemente aufweisen, welche geeignet miteinander verbunden sind.

Alternativ ist es auch möglich, dass der Käfig als Schalensegment ausgebildet ist. In diesem Fall kann das Schalensegment unterhalb des Rands der Öffnung des Ventilglieds befestigt sein. Dabei ist der Übergang zwischen dem Ventilglied und dem Schalensegment möglichst glatt, um die Gleitbewegung des Dichtelements nicht negativ zu beeinflussen, damit sich das Dichtelement nicht unnötig abnützt.

Das Schalensegment füllt nur einen kleinen Teil der Fläche der Öffnung aus. Insbesondere beträgt der durch das Schalensegment gebildete Teil der Fläche weniger als 20%, weniger als 10%, weniger als 5% oder weniger als 3% der Fläche der Öffnung.

Gemäß einer Ausführungsform der Ventilanordnung ist der Käfig durch die Öffnung in das Ventilglied einsteckbar. Vorteilhafterweise kann der Käfig dann einfach mit dem Ventilglied verbunden werden. Weiter kann die Einsteckrichtung des Käfigs der Richtung entsprechen, in der das formgebende Werkzeug nach der Formung aus dem Ventilglied gezogen wird.

Vorzugsweise weist das Ventilglied eine konstante Wanddicke auf. Dadurch, dass die Wanddicke konstant gehalten wird, ist es möglich, eine sehr glatte Oberfläche des Ventilglieds zu realisieren. Mittels der sehr glatten Oberfläche gelingt wiederum eine sehr gute Abdichtung zwischen Ventilglied und Dichtelement.

Zweckmäßigerweise kann zumindest eine Dosiernase an einem Rand der Öffnung ausgebildet sein. Dabei ist die zumindest eine Dosiernase ein Teil des Ventilglieds. Die zumindest eine Dosiernase dient dazu, die Strömung des Fluids durch die Öffnung beim Drehen des Ventilglieds besser, d.h. insbesondere feiner, regeln zu können.

Zweckmäßigerweise kann das Ventilglied Kunststoff aufweisen oder aus Kunststoff bestehen. Vorteilhafterweise kann das Ventilglied dann in einem Spritzgussverfahren hergestellt sein.

Es liegt schließlich im Rahmen der Erfindung, dass das Dichtelement Polytetrafluorethylen (PTFE) und/oder ein gleitoptimiertes Elastomer aufweist oder aus einem oder beiden dieser Materialien besteht. Insbesondere der Bereich des Dichtelements, welcher mit dem Ventilglied in Berührung kommt, ist zum Gleiten auf dem Ventilglied, bei einer Drehung des Ventilglieds, geeignet.

Weitere mögliche Implementierungen der Erfindung umfassen auch nicht explizit genannte Kombinationen von zuvor oder im Folgenden beschriebenen Merkmalen.

Dabei wird der Fachmann auch Einzelaspekte als Verbesserungen oder Ergänzungen zu der jeweiligen Grundform der Erfindung hinzufügen.

Die Erfindung wird im Folgenden anhand der Zeichnungen näher erläutert. Diese zeigen in
- Fig. 1: eine Explosionsansicht einer erfindungsgemäßen Ventilanordnung,
- Fig. 2: eine perspektivische Ansicht des Ventilglieds und des Käfigs aus Fig. 1 in teilweise zusammengebauter Form,
- Fig. 3: eine perspektivische Ansicht des Ventilglieds und des Käfigs aus Fig. 1 in zusammengebauter Form,
- Fig. 4: eine perspektivische Ansicht des Käfigs aus Fig. 1 mit Dosiernasen, und
- Fig. 5: eine perspektivische Ansicht des Ventilglieds und des Käfigs aus Fig. 1 in zusammengebauter Form, wobei der Käfig eine Dosiernase aufweist.

In den Figuren sind gleiche oder funktionsgleiche Elemente mit denselben Bezugszeichen versehen worden. Ferner sollte beachtet werden, dass die Darstellungen in den Figuren nicht notwendigerweise maßstabsgerecht sind.

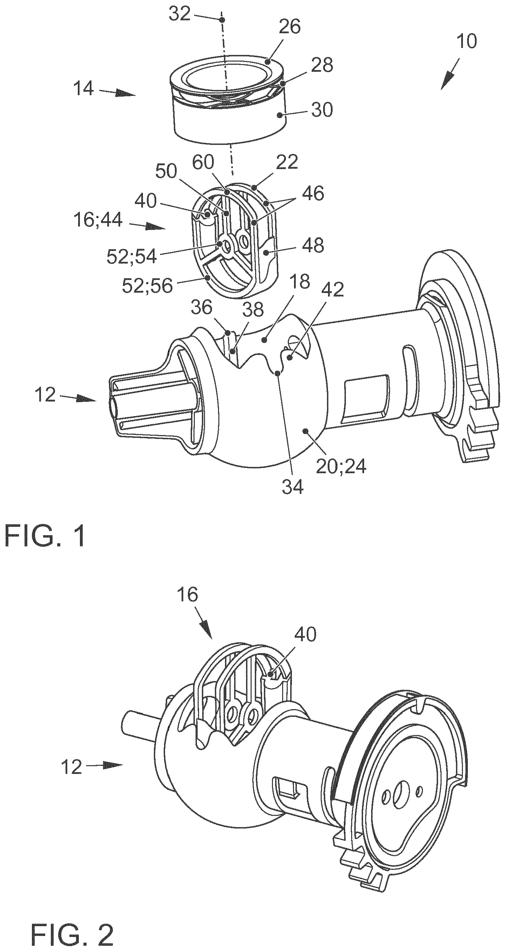

Fig. 1 zeigt eine Explosionsansicht einer erfindungsgemäßen Ventilanordnung 10. Bei der Ventilanordnung 10 kann es sich insbesondere um ein Regelventil zur Regelung eines Kühlmittelkreislaufs einer Brennkraftmaschine handeln. Die Ventilanordnung 10 weist ein Ventilglied 12, ein Dichtelement 14 und einen Käfig 16 auf. Das Ventilglied 12 dient zum Leiten eines Fluids. Das Fluid kann an einer Öffnung 18 in der Mantelfläche 20 des Ventilglieds 12 aus- oder eintreten. Dagegen dient das Dichtelement 14 zum Abdichten eines Übergangs zwischen dem Ventilglied 12 und einem Fluidkanal (in Fig. 1 nicht dargestellt). Der Fluidkanal wird durch ein an das Dichtelement angrenzendes Gehäuse gebildet. Der Übergang stellt den Bereich zwischen dem Ventilglied 12 und dem Fluidkanal dar.

Der Käfig 16 unterbindet ein Durchsacken des Dichtelements 14 in die Öffnung 18 des Ventilglieds 12. Dabei ist der Käfig 16 in dem Ventilglied 12 angeordnet. Weiter weist der Käfig 16 einen freiliegenden Bereich 22 auf. An dem freiliegenden Bereich 22 ist die Kontur 24 des Ventilglieds 12 fortgeführt.

Bei dem in der Fig. 1 dargestellten Ventilglied 12 ist die Kontur 24 im Bereich der Öffnung 18 kugelförmig. Alternativ könnte die Kontur 24 im Bereich der Öffnung 18 aber auch beispielsweise zylinderförmig sein. Die Geometrie des Dichtelements 14 wird entsprechend der Kontur 24 des Ventilglieds 12 im Bereich der Öffnung 18 ausgebildet.

Das in Fig. 1 gezeigte Dichtelement 14 weist eine metallische Führungshülse 26, ein Vorspannelement 28, einen Elastomer-Dichtring (in Fig. 1 nicht gezeigt) und eine Dichthülse 30 aus Kunststoff auf. Die Führungshülse 26 und die Dichthülse 30 überlappen einander zumindest abschnittsweise und sind relativ zueinander in Richtung der Achse 32, d.h. in axialer Richtung, beweglich. Dabei drückt das Vorspannelement 28 die Führungshülse 26 und die Dichthülse 30 auseinander.

Mittels des Vorspannelements 28 wird die Dichthülse 30 gegen das Ventilglied 12 gedrückt, um gegen das Ventilglied 12 abzudichten. Weiter wird mittels des Vorspannelements 28 die Führungshülse 26 gegen den Fluidkanal (in Fig. 1 nicht dargestellt) gedrückt, um gegen den Fluidkanal abzudichten. Der Elastomer-Dichtring dichtet den Bereich zwischen der Führungshülse 26 und der Dichthülse 30 ab. Das Dichtelement 14 ist dementsprechend druckvorgespannt zwischen dem Fluidkanal, d.h. dem Gehäuse, welches den Fluidkanal bildet, und dem Ventilglied 12 positioniert.

Das Eintauchen des Dichtelements 14 in die Öffnung 18 beim Drehen des Ventilglieds 12 wird durch den Käfig 16 verhindert, da das Dichtelement 14 auf dem Käfig 16 gleiten kann. Dadurch wird eine Kollision zwischen dem Dichtelement 14 mit dem Rand 34 der Öffnung 18 verhindert. Dementsprechend ist eine Beschädigung des Dichtelements 14 weitgehend ausgeschlossen. Weiter kann die Öffnung 18 aufgrund fertigungstechnischer Gesichtspunkte gebildet werden, ohne Rücksicht auf den Aspekt des Absinkens des Dichtelements 14 in die Öffnung 18.

Die Ventilanordnung 12 zeigt einen optionalen Auflaufsteg 36. Mittels des optionalen Auflaufstegs 36 wird das Dichtelement 14 beim Drehen des Ventilglieds 12 aus der Öffnung 18 wieder auf die Mantelfläche 20 gehoben. Der optionale Auflaufsteg 36 dient ebenfalls dazu, eine Kollision zwischen dem Dichtelement 14 und dem Rand 34 der Öffnung 18 zu verhindern. Der Käfig 16 kann nicht die gesamte Öffnung 18 verschließen, da ansonsten kein Fluid mehr durch die Öffnung 18 fließen könnte. Daher kann der optionale Auflaufsteg 36 sinnvoll in von dem Käfig 16 entfernten Bereichen am Rand 34 der Öffnung 18 eingesetzt werden. Aus fertigungstechnischen Gründen kann der Auflaufsteg 36 nicht beliebig weit in die Öffnung 18 hineinragen.

Wie Fig. 1 zeigt, ist der Käfig 16 durch die Öffnung 18 in das Ventilglied 12 einsteckbar. Das Einstecken kann über eine Steckverbindung realisiert werden. Dazu können das Ventilglied 12 und der Käfig 16 formschlüssig verbunden werden. Beispielsweise ist an der Innenseite des Ventilglieds 12 eine Schiene 38 vorgesehen, welche passend in eine Nut 40 des Käfigs 16 eingreifen kann.

Die Einsteckrichtung des Käfigs 16 entspricht der Entformungsrichtung, d.h. der Richtung, in der ein formgebendes Werkzeug nach der Formgebung aus dem Ventilglied 12 gezogen wird. Dies erlaubt eine einfache Montage und Fixierung des Käfigs 16 in dem Ventilglied 12.

Das Ventilglied 12 kann vollständig oder teilweise aus Kunststoff bestehen. Insbesondere kann das Ventilglied 12 im Spritzgussverfahren hergestellt sein.

Da der Käfig 16 ein Eintauchen des anliegenden Dichtelements 14 in die Öffnung 18 unterbindet, ist es nicht mehr erforderlich, das Dichtelement 14 steif auszuführen. Der Einsatz eines Dichtelements 14, welches im Kontaktbereich zum Ventilglied 12 weich ist, ermöglicht wiederum eine gute Kompensation von Oberflächenformfehlern (Mulden) an dem Ventilglied 12 und sorgt damit für eine gute Dichtwirkung. Dementsprechend kann das Dichtelement 14 ganz oder teilweise aus Polytetrafluorethylen (PTFE) und/oder einem gleitoptimierten Elastomer gebildet sein.

Weiter kann die Öffnung 18 in Rotationsrichtung des Ventilglieds 12 speziell ausgebildet sein. Wie in Fig. 1 dargestellt ist, sind an dem Rand 34 der Öffnung 18 zwei Dosiernasen 42 ausgebildet. Die Dosiernasen 42 dienen zum besseren, d.h. insbesondere feineren, Regeln des Volumenstroms des Fluids beim Drehen des Ventilglieds 12.

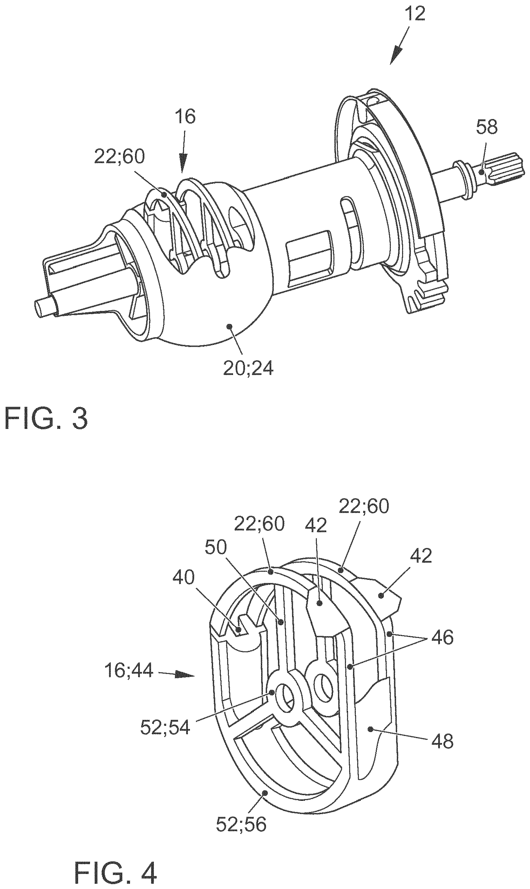

Der Käfig 16 ist vorzugsweise als Gitterstruktur 44 ausgebildet. Die in Fig. 1 gezeigte Gitterstruktur 44 umfasst zwei Scheibenelemente 46, welche in einem Verbindungsbereich 48 miteinander verbunden sind. Die Scheibenelemente 46 sind gegenüber dem Fluid durchlässig. Weiter weist jedes Scheibenelement 46 drei Stäbe 50 sowie zwei gebogene Strukturen 52 auf. Genauer zeigt Fig. 1 eine innere gebogene Struktur 54 und eine äußere gebogene Struktur 56. Dabei verbinden die Stäbe 50 die innere gebogene Struktur 54 und die äußere gebogene Struktur 56. Weiter dient die innere gebogene Struktur 54 zur Aufnahme einer Welle 58 (siehe Fig. 3). Die äußere gebogene Struktur 56 stellt die äußere Begrenzung des Scheibenelements 46 dar.

Wie in Fig. 1 dargestellt, ist in dem Verbindungsbereich 48 eine Nut 40 vorgesehen, um die Gitterstruktur 44 mit dem Ventilglied 12 formschlüssig zu verbinden. Der Käfig 16, d.h. die Gitterstruktur 44, weist einen Bereich auf, welcher nicht von dem Ventilglied 12 umschlossen ist, wenn sich der Käfig 16 in dem Ventilglied 12 befindet. An diesem sogenannten freiliegenden Bereich 22 weist der Käfig 16 zwei Kufen 60 auf. Die Kufen 60 sind Teilbereiche der äußeren gebogenen Strukturen 56. Dabei erstrecken sich die Kufen 60 entlang einer Gleitrichtung des Dichtelements 14. Dabei wird die Gleitrichtung des Dichtelements 14 durch die Rotation des Ventilglieds 12 mittels der Welle 58 bestimmt.

Die Anzahl der Stäbe 50 und/oder der gebogene Strukturen 52 eines Scheibenelements 46 kann zwischen 1 und 10, bevorzugt zwischen 1 und 5 und insbesondere zwischen 1 und 3 liegen. Weiter kann die Anzahl der Scheibenelemente 46 eines Käfigs 16 zwischen 1 und 5 und bevorzugt zwischen 1 und 3 liegen.

Fig. 2 zeigt eine perspektivische Ansicht des Ventilglieds 12 und des Käfigs 16 aus Fig. 1 in teilweise zusammengebauter Form. Dabei ist der Käfig 16 bereits ein Stück weit mittels der Nut 40 entlang der Schiene 38 in das Ventilglied 12 geschoben.

Fig. 3 zeigt eine perspektivische Ansicht des Ventilglieds 12 und des Käfigs 16 aus Fig. 1 in zusammengebauter Form. Der Käfig 16 ist vollständig in das Ventilglied 12 eingesteckt und mittels der Welle 58 zusätzlich fixiert. Dabei ist der Käfig 16 so in dem Ventilglied 12 angeordnet und ausgebildet, dass mittels der Kufen 60 die Kontur 24 der Mantelfläche 20 des Ventilglieds 12 im freiliegenden Bereich 22 fortgeführt ist.

Das Ventilglied 12 weist eine konstante Wanddicke auf. Dadurch kann eine glatte Oberfläche an der Mantelfläche 20 des Ventilglieds 12 realisiert werden.

Alternativ kann der Käfig 16 auch als Schalensegment ausgebildet sein. In diesem Fall erstreckt sich das Schalensegment von einem Rand 34 zu dem gegenüberliegenden Rand 34 der Öffnung 18. Dabei wird das Schalensegment unterhalb des Rands 34 der Öffnung 18 fixiert. Das Schalensegment kann ebenfalls eine oder mehrere Kufen 60 aufweisen, welche sich entlang der Gleitrichtung des Dichtelements 14 erstrecken. In jedem Fall führt das Schalensegment die Kontur 24 des Ventilglieds 12 im freiliegenden Bereich 22 fort.

Fig. 4 zeigt eine perspektivische Ansicht des Käfigs 16 aus Fig. 1. Zusätzlich weist der Käfig 16 zwei Dosiernasen 42 auf.

Die Herstellung der Geometrie der Öffnung 18 und der Dosiernasen 42, welche am Rand 34 der Öffnung 18 mittels des Ventilglieds 12 ausgebildet sind, unterliegt entformungstechnischen Grenzen. Dabei können die entformungstechnischen Grenzen durch Spezialwerkzeuge verschoben werden. Insbesondere können die Spezialwerkzeuge auseinandergebaut oder gefaltet werden, um nach der Formgebung aus dem Ventilglied 12 gezogen zu werden. Aufgrund des Einsatzes von Dosiernasen 42 des Käfigs 16 können strömungsoptimierende Geometrien der Ventilanordnung 10 freier gestaltet werden, da Geometrien, die mit dem Ventilglied 12 fertigungstechnisch schwer oder gar nicht darstellbar sind, auf den Käfig 16 übertragen werden.

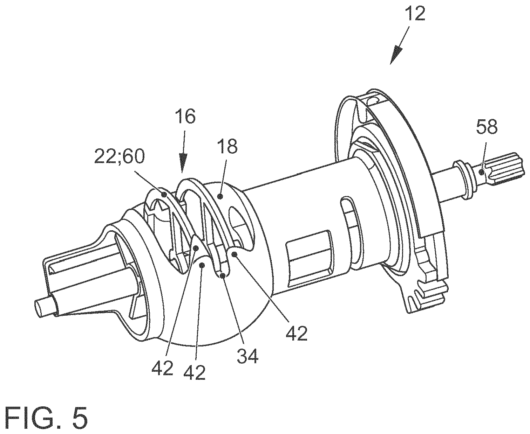

Fig. 5 zeigt eine perspektivische Ansicht des Ventilglieds 12 und des Käfigs 16 aus Fig. 1 in zusammengebauter Form. Dabei weist der Käfig 16 eine Dosiernase 42 auf. Ebenso weist das Ventilglied 12 am Rand 34 der Öffnung 18 zwei Dosiernasen 42 auf.

Prinzipiell können die Dosiernasen 42 nur mittels des Käfigs 16, nur mittels des Ventilglieds 12 am Rand 34 der Öffnung 18 oder sowohl mittels des Käfigs 16 als auch mittels des Ventilglieds 12 ausgebildet sein.

### Bezugszeichenliste

- 10: Ventilanordnung
- 12: Ventilglied
- 14: Dichtelement
- 16: Käfig
- 18: Öffnung
- 20: Mantelfläche
- 22: freiliegender Bereich des Käfigs
- 24: Kontur des Ventilglieds
- 26: Führungshülse
- 28: Vorspannelement
- 30: Dichthülse
- 32: Achse
- 34: Rand der Öffnung
- 36: Auflaufsteg
- 38: Schiene
- 40: Nut
- 42: Dosiernase
- 44: Gitterstruktur
- 46: Scheibenelement
- 48: Verbindungsbereich
- 50: Stab
- 52: gebogene Struktur
- 54: innere gebogene Struktur
- 56: äußere gebogene Struktur
- 58: Welle
- 60: Kufe

## Patentansprüche

1. Ventilanordnung (10), insbesondere Regelventil zur Regelung eines Kühlmittelkreislaufs einer Brennkraftmaschine, aufweisend
ein Ventilglied (12) zum Leiten eines Fluids mit einer Öffnung (18), und
ein Dichtelement (14) zum Abdichten eines Übergangs zwischen dem Ventilglied (12) und einem Fluidkanal,wobei die Ventilanordnung (10) einen Käfig (16) zum Unterbinden des Durchsackens des Dichtelements (14) in die Öffnung (18) des Ventilglieds (12) aufweist, wobei der Käfig (16) in dem Ventilglied (12) angeordnet ist und einen freiliegenden Bereich (22) an der Öffnung (18) aufweist, an welchem eine Kontur (24) des Ventilglieds (12) fortgeführt ist,
**dadurch gekennzeichnet,**
**dass** zumindest eine Dosiernase (42) mittels des Käfigs (16) ausgebildet ist.

2. Ventilanordnung nach Anspruch 1, **dadurch gekennzeichnet, dass** der Käfig (16) eine Gitterstruktur (44) umfasst, wobei der Käfig (16) an dem an der Öffnung (18) freiliegenden Bereich (22) zumindest eine Kufe (60) aufweist, welche sich entlang einer Gleitrichtung des Dichtelements (14) erstreckt.

3. Ventilanordnung nach Anspruch 1 oder 2, **dadurch gekennzeichnet, dass** der Käfig (16) zumindest ein durchlässiges Scheibenelement (46) aufweist.

4. Ventilanordnung nach Anspruch 1 oder 2, **dadurch gekennzeichnet, dass** der Käfig (16) als Schalensegment ausgebildet ist.

5. Ventilanordnung nach mindestens einem der vorhergehenden Ansprüche, **dadurch gekennzeichnet, dass** der Käfig (16) durch die Öffnung (18) in das Ventilglied (12) einsteckbar ist.

6. Ventilanordnung nach mindestens einem der vorhergehenden Ansprüche, **dadurch gekennzeichnet, dass** das Ventilglied (12) eine konstante Wanddicke aufweist.

7. Ventilanordnung nach mindestens einem der vorhergehenden Ansprüche, **dadurch gekennzeichnet, dass** zumindest eine Dosiernase (42) an einem Rand (34) der Öffnung (18) ausgebildet ist.

8. Ventilanordnung nach mindestens einem der vorhergehenden Ansprüche, **dadurch gekennzeichnet, dass** das Ventilglied (12) Kunststoff aufweist oder aus Kunststoff besteht.

9. Ventilanordnung nach mindestens einem der vorhergehenden Ansprüche, **dadurch gekennzeichnet, dass** das Dichtelement (14) Polytetrafluorethylen, d.h. PTFE und/oder ein gleitoptimiertes Elastomer aufweist oder aus einem oder beiden dieser Materialien besteht.

## Claims

1. A valve assembly (10), in particular a regulating valve for regulating a coolant circuit of an internal combustion engine, having
a valve member (12) for guiding a fluid with an opening (18), and
a sealing element (14) for sealing off a transit between the valve member (12) and a fluid channel, wherein the valve assembly (10) has a cage (16) for preventing sagging the sealing element (14) into the opening (18) of the valve member (12), wherein the cage (16) is arranged in the valve member (12) and has a free region (22) on the opening (18) on which an outline (24) of the valve member (12) is continued, **characterized in that** at least one dosing tab (42) is configured by means of the cage (16).

2. The valve assembly according to claim 1, **characterized in that** the cage (16) comprises a grid structure (44), wherein the cage (16) has at least one runner (60) on the region (22) on the opening (18), the runner (60) extending along a sliding direction of the sealing element (14).

3. The valve assembly according to claim 1 or 2, **characterized in that** the cage (16) has at least one permeable disc element (46).

4. The valve assembly according to claim 1 or 2, **characterized in that** the cage (16) is configured as a shell element.

5. The valve assembly according to at least one of the preceding claims, **characterized in that** the cage (16) is insertable through the opening (18) into the valve member (12).

6. The valve assembly according to at least one of the preceding claims, **characterized in that** the valve member (12) has a constant wall thickness.

7. The valve assembly according to at least one of the preceding claims, **characterized in that** at least one dosing tab (42) is configured on an edge (34) of the opening (18).

8. The valve assembly according to at least one of the preceding claims, **characterized in that** the valve member (12) has plastic or is made of plastic.

9. The valve assembly according to at least one of the preceding claims, **characterized in that** the sealing element (14) has polytetrafluoroethylene, i.e. PTFE and/or an elastomer with optimized sliding or consists of one or both of these two materials.

## Revendications

1. Agencement de soupape (10), en particulier soupape de réglage pour le réglage d'un circuit de refroidissement d'un moteur à combustion interne, comportant
un élément de soupape (12) pour conduire un fluide avec un orifice (18), et
un élément d'étanchéité (14) pour étanchéifier un passage entre l'élément de soupape (12) et un canal de fluide, l'agencement de soupape (10) comportant une cage (16) pour empêcher l'affaissement de l'élément d'étanchéité (14) dans l'orifice (18) de l'élément de soupape (12), la cage (16) étant agencée dans l'élément de soupape (12) et comportant une zone dégagée (22) à l'orifice (18), dans laquelle un contour (24) de l'élément de soupape (12) est continué,
**caractérisé en ce qu'**au moins une languette de dosage (42) est formée au moyen de la cage (16).

2. Agencement de soupape selon la revendication 1, **caractérisé en ce que** la cage (16) comprend une structure réticulaire (44), la cage (16) comportant au moins un patin (60) à la zone dégagée (22) à l'orifice (18), ledit patin s'étendant le long d'une direction de glissement de l'élément d'étanchéité (14) .

3. Agencement de soupape selon la revendication 1 ou 2, **caractérisé en ce que** la cage (16) comporte au moins un élément de disque perméable (46).

4. Agencement de soupape selon la revendication 1 ou 2, **caractérisé en ce que** la cage (16) est conçue comme un segment de coque.

5. Agencement de soupape selon au moins l'une des revendications précédentes, **caractérisé en ce que** la cage (16) peut être insérée à travers l'orifice (18) dans l'élément de soupape (12).

6. Agencement de soupape selon au moins l'une des revendications précédentes, **caractérisé en ce qu'**élément de soupape (12) comporte une épaisseur de paroi constante.

7. Agencement de soupape selon au moins l'une des revendications précédentes, **caractérisé en ce qu'**au moins une languette de dosage (42) est réalisée à un bord (34) de l'orifice (18).

8. Agencement de soupape selon au moins l'une des revendications précédentes, **caractérisé en ce que** l'élément de soupape (12) comporte du plastique ou est constitué de matière plastique.

9. Agencement de soupape selon au moins l'une des revendications précédentes, **caractérisé en ce que** l'élément d'étanchéité (14) comporte du polytétrafluoroéthylène, c'est-à-dire du PTFE et/ou un élastomère dont les caractéristiques de glissement ont été optimisées ou est constitué de l'un ou de ces deux matériaux.
